Europäisches Patentamt

European Patent Office

Office européen des brevets

(19)

(11) Publication number: **0 062 494**
**A2**

(12)

# EUROPEAN PATENT APPLICATION

(21) Application number: **82301696.9**

(51) Int. Cl.³: **B 01 D 13/00**

(22) Date of filing: **31.03.82**

(30) Priority: **02.04.81 JP 50366/81**
**31.08.81 JP 137284/81**
**31.08.81 JP 137286/81**
**30.09.81 JP 156456/81**
**30.09.81 JP 156458/81**

(43) Date of publication of application: **13.10.82**
**Bulletin 82/41**

(84) Designated Contracting States: **DE FR GB IT**

(71) Applicant: **KURARAY CO. LTD., 1621 Sakazu, Kurashiki City Okayama Prefecture (JP)**

(72) Inventor: **Tanaka, Yoshinobu, 1660 Sakazu, Kurashiki-city (JP)**
Inventor: **Mochizuki, Akira, 1652 Sakazu, Kurashiki-city (JP)**
Inventor: **Sato, Yoshio, 1621 Sakazu, Kurashiki-city (JP)**
Inventor: **Ogawara, Hisashi, 160 Shijuse, Kurashiki-City (JP)**

(74) Representative: **Crampton, Keith John Allen et al, D YOUNG & CO 10 Staple Inn, London WC1V 7RD (GB)**

(54) **Method and device for separating mixed liquid components.**

(57) Two liquid components A and B of a mixed liquid are efficiently separated from each other by allowing the mixed liquid to permeate a membrane $M_A$ having a separation factor $\alpha_{A/B}^A$ of more than 1 and removing component B from the liquid which has permeated membrane $M_A$ by means of a membrane $M_B$ having a separation factor $\alpha_{B/A}^B$ of more than 1. Devices for carrying out this method are also disclosed.

EP 0 062 494 A2

ACTORUM AG

1

## METHOD AND DEVICE FOR SEPARATING MIXED LIQUID COMPONENTS

This invention relates to the separation of components of a mixed liquid by using a positive membrane and a negative membrane.

Recent rapid developments in liquid-component-separation techniques using membranes have put a variety of separation methods to practical use, such as reverse osmosis in desalination of sea water, ultrafiltration in sterilization, dialysis in artificial kidneys and gas separation in production of oxygen-enriched air. However, no methods of separating components of a mixed liquid involving a liquid-separating membrane or a liquid-liquid separation membrane have been put to practical use.

This is because conventional membrane separation methods mostly use the difference in size of component particles or molecules, thus depending, for instance, on the molecular sieve principle that particles smaller than micropores of a membrane can permeate the membrane while particles greater than the micropores cannot permeate the membrane, or on the thermodynamic principle that smaller particles which are in more intense diffusive movement as compared with larger particles have higher possibilities of diffusing through and permeating a membrane, whereas liquid separation methods mostly use the differences in affinity for a membrane among mixed liquid components, thus depending upon the affinity principle that components having great affinities can permeate the membrane while components having lower affinities cannot. In other words, the problem is that it is not easy to find out a membrane having separation-permeation performance characteristics rendering it adequate for practical use, because the principle of separation is quite different from the principles of other separation methods using membranes.

United States Patent No. US-A-2,953,502 discloses that an azeotropic mixture can be separated into components by pervaporation using a vinyl alcohol polymer membrane; U.S. Patent No. US-A-3,726,934 teaches that styrene can be separated from a styrene-benzene mixture using an acrylonitrile polymer membrane as the separation membrane, and U.S. Patent No. US-A-2,960,462 states that an organic mixture can be separated into components using a composite membrane made up of ethylcellulose and polyethylene or cellulose butyrate acetate as a separation membrane durable and resistant to pressure differences. However, these methods are inferior in separation efficiency and can treat and separate only unsatisfactorily small amounts, and therefore require a large-scale pervaporation device, which will result in an increase in cost of production.

The separation factor $\alpha_{A/B}$ and flux L are parameters indicative of the performance of a permeation/separation membrane. When the concentrations (weight fractions) of two components A and B are expressed by [A] and [B], respectively, with suffixes 'in' and 'out' for respectively denoting the concentration values before and after permeation through the membrane, the separation factors $\alpha_{A/B}$ and $\alpha_{B/A}$ are defined by the following formulas:

$$\alpha_{A/B} = \frac{\left(\dfrac{[A]}{[B]}\right)_{out}}{\left(\dfrac{[A]}{[B]}\right)_{in}} \ , \qquad \alpha_{B/A} = \frac{\left(\dfrac{[B]}{[A]}\right)_{out}}{\left(\dfrac{[B]}{[A]}\right)_{in}} \qquad (1)$$

Therefore, $\alpha_{A/B} = 1/\alpha_{B/A}$. The flux L is the quantity of a liquid which has permeated the membrane per unit membrane area per unit time and is usually given in $g/m^2 \cdot hr$. As to the separation factor $\alpha_{A/B}$, if the membrane is more permeable to component A than to component B, then $\alpha_{A/B}$ is greater than 1 since $([A]/[B])_{out}$ is greater than $([A]/[B])_{in}$. Conversely, if the membrane is more permeable to component B, then $\alpha_{B/A}$ is greater than 1. If the membrane is equally permeable to component A as well as to component B, $\alpha_{A/B} = \alpha_{B/A} = 1$.

When the separation factor $\alpha_{A/B}$ of a membrane for separation of liquids is great, the flux L is in general small, and conversely, when L is great, $\alpha_{A/B}$ is generally small. In other words, a membrane which can perform highly efficient separation to give a highly concentrated component A will produce only a small amount of the desired concentrate because the flux is small. On the other hand, a membrane which produces a large volume of a treated liquid will give a less concentrated component A. In typical instances, a membrane shows a separation factor $\alpha_{A/B} = \infty$ (i.e. the concentration of component A in the liquid which has permeated the membrane $[A]_{out} = 100$ weight %) and a flux $L = 3.4$ $g/m^2 \cdot hr$, and another membrane gives a separation factor $\alpha_{B/A} = 8.5$ and a flux $L = 1,950$ $g/m^2 \cdot hr$. It is thus difficult to obtain a large amount of a highly concentrated liquid in a short period of time in accordance with the prior art methods.

If a membrane capable of affording a great separation factor $\alpha_{A/B}$ and a large flux L could be obtained by improvements in membrane material and/or membrane structure, such a membrane must be essentially effective to overcome the above-mentioned drawbacks. However, it is in principle difficult

4

to obtain such an ideal membrane for liquid separation. For the separation factor $\alpha_{A/B}$ to be great, the membrane should have a high degree of affinity for component A and have no affinity for component B and in addition it is important that micropores of the membrane should be sufficiently small to ensure contact of molecules of component A and molecules of component B with the micropore wall. For example, the affinity of a polytetrafluoroethylene·resin for ethanol (component A) is very great as compared with that for water (component B); nevertheless, when the size of micropores of a membrane made up of the resin is about 50 microns and therefore so great as to render the molecular size of each of the components (diameter of the molecule: 2-7 angstroms) negligible as a matter of comparison, the membrane cannot achieve separation of an ethanol-water mixture into components thereof at all; the concentrations of the components in the liquid which has permeated the membrane remain quite the same as those in the original mixture within the limits of experimental errors ($\alpha_{A/B} = 1$). In that case, the flux L is 140,000 to 250,000 g/m$^2$·hr. On the contrary, a polyvinyl alcohol membrane having sufficiently small micropores (5-60 angstroms) can separate a mixture of methanol and methyl acetate in a very efficient manner, so that the methanol concentration in the liquid which has permeated the membrane amounts to almost 100 weight % ($\alpha_{A/B} = \infty$), with the flux L $\doteqdot$ 3.4 g/m$^2$·hr. For the separation factor $\alpha_{A/B}$ to be so great, the micropore size is required to be small, and on the other hand for the flux to be great, the micropore size is required to be large, as is well known in the art.

In the case of a membrane for liquid separation, to increase both the performance with respect to separation and that with respect to permeation might be thought to have requirements that are mutually contradictory in principle. It might easily be supposed that there is an extreme difficulty.

The present invention is based on intensive and extensive research for a way to overcome the above difficulties. The present invention provides a method for liquid separation which comprises allowing a mixed liquid containing at least two components A and B different in polarity to permeate a membrane $M_A$ having a separation factor $\alpha_{A/B}^{A}$ of more than 1 (i.e. more permeable to component A) and removing component B from the liquid that has permeated membrane $M_A$ by means of a membrane $M_B$ having a separation factor $\alpha_{B/A}^{B}$ of more than 1 (i.e. more permeable to component B), whereby component A is separated from component B.

The symbol $\alpha_{A/B}^{A}$ used herein means a separation factor obtainable with membrane $M_A$ and $\alpha_{B/A}^{B}$ means a separation factor attainable with membrane $M_B$.

The principle of the method for liquid separation in accordance with the invention is now illustrated. The separation factors of two membranes $M_A$ and $M_B$ are represented by symbols $\alpha_{A/B}^A$ and $\alpha_{B/A}^B$ with suffixes A and B attached at the upper right for distinction, as mentioned above. The fluxes are likewise represented by $L^A$ and $L^B$ for membranes $M_A$ and $M_B$, respectively. To facilitate the understanding, the following concrete numerical values are given by way of example:

For membrane $M_A$: $\alpha_{A/B}^A = 10$, $L^A = 5,000$ g/m$^2$·hr;

For membrane $M_B$: $\alpha_{B/A}^B = 50$, $L^B = 500$ g/m$^2$·hr.

If the concentrations of components A and B in a mixed liquid before permeation are [A] = [B] = 50 weight %, then the concentrations of components A and B after permeation through membrane $M_A$ are given by solving the following simultaneous equations based on formula (1):

$$\left(\frac{[A]}{[B]}\right)_{out} = \alpha_{A/B}^A \left(\frac{[A]}{[B]}\right)_{in} = 10 \times \frac{50}{50} = 10$$

$$[B] = 100 - [A]$$

Thus are obtained [A] = 90.90909 weight % and [B] = 9.09091. If this liquid which has permeated membrane $M_A$ is treated for separation with membrane $M_B$, the concentrations of the components in the liquid which has permeated membrane $M_B$ are calculated, from the relation

$$\left(\frac{[B]}{[A]}\right)_{out} = \alpha_{B/A}^{B}\left(\frac{[B]}{[A]}\right)_{in} = 50 \times \left(\frac{9.09091}{90.90909}\right) = 5$$

at [B] = 83.3333 weight % and [A] = 16.6667 weight %. Therefore, the concentration of component A in the liquid which has not permeated membrane $M_B$ will be

$$[A] = \frac{L^B \times 90.90909 - L^B \times 16.66667}{L^A - L^B}$$

and the amount of said liquid 4,500 g/m²·hr. The above may be illustrated schematically as follows:

|  | Membrane $M_A$ | | Membrane $M_B$ |
|---|---|---|---|
| [A] = 50 weight % | → | [A] = 90.9 weight % →| [A] = 16.7 weight % |
| [B] = 50 weight % | | [B] = 9.1 weight % | [B] = 83.3 weight % |
| | | L = 5,000 g/m²·hr | L = 500 g/m²·hr |

↓

[A] = 99.2 weight %

[B] = 0.8 weight %

L = 4,500 g/m²·hr

When the separation factor of a membrane which is equivalent to a combined membrane system in accordance with the invention is calculated from the above results using formula (1), then

$$\alpha_{A/B} = \left(\frac{99.2}{0.8}\right)/\left(\frac{50}{50}\right) = 117.8$$

Therefore, the use of membrane $M_A$ ($\alpha_{A/B}^{A} = 10$, $L^A = 5,000$ g/m²·hr) and membrane $M_B$ ($\alpha_{B/A}^{B} = 50$, $L^B = 500$ g/m²·hr) in accordance with the invention is equivalent to the use of a membrane with $\alpha_{A/B} = 117.8$ and L = 4,500 g/m²·hr in accordance with the prior art. The method of the invention may thus be said to be a new separation method which has only the advantages of the two membranes, namely high flux attainable with membrane $M_A$ and great separation factor obtainable with membrane $M_B$, and produces the same effect as might be produced if a prior art membrane with a great separation factor and a large flux were

8

available.

A system in which two membranes different in micropore size are combinedly used is so far well known. The system seems similar to that used in the method of the present invention but is quite different therefrom in principle. Roughly speaking, the principle of this prior art method is the same as that of powder separation into three fractions different in particle size by sieving a powder using two screens, namely a rough mesh screen and a fine mesh screen, whereby a particle fraction which does not pass through the rough mesh screen, a particle fraction which passes through the rough mesh screen but does not pass through the fine mesh screen and a particle fraction which passes through the fine mesh screen are separated out. The use of ultrafiltration membranes in place of the screens results in the conventional method. In the system which is known as the blood-treating system and uses an ultrafiltration membrane and a dialysing membrane in combination, blood components are separated into three fractions respectively containing erythrocytes, proteins and urea depending on the size of the particles or molecules according to the very same principle. The following points clarify the distinction between the principle of the method of the invention and that of such conventional combined membrane systems:

(1) The conventional methods are used to separate three components from one another, but are quite meaningless in cases where two components are to be separated from each other. The method of the invention is intended for use in separating two or more components from one another.

(2) A membrane $M_A$ and membrane $M_B$ to be used in accordance with the invention are opposite in permeability; membrane $M_A$ is more permeable to component A while membrane $M_B$ is more permeable to component B. In the prior art, the two membranes used in combination are never opposite in permeability but always have permeabilities in the same direction so that larger particles can permeate them less easily and smaller particles more easily.

Apart from the method of the invention, a method may be conceivable that comprises introducing a mixed liquid into the space between membrane $M_A$ and membrane $M_B$ for simultaneous separation by the two membranes. In this method, the liquid that has permeated membrane $M_A$ will be rich in component A and the liquid that has permeated membrane $M_B$ will be rich in component B. However, such an unexpectedly good effect as is obtainable in accordance with the invention cannot be expected from that method. Unlike the method of the invention, said method preferably requires that the ratio in flux between membrane $M_A$ and membrane $M_B$ should be almost equal to the ratio in concentration between component A and component B. However, it is in fact very difficult to obtain such a combination of two membranes.

In accordance with the present invention, components A and B can efficiently be separated from each other if, for membrane $M_A$, $\alpha^A_{A/B}$ is more than 1 and, for membrane $M_B$, $\alpha^B_{B/A}$ is more than 1. From the industrial viewpoint, it is preferred that each of $\alpha^A_{A/B}$ and $\alpha^B_{B/A}$ is not less than 15, particularly not less than 5, and especially not less than 10.

Whereas larger $\alpha^A_{A/B}$ and $\alpha^B_{B/A}$ values are preferable, fluxes $L^A$ and $L^B$ tend to decrease as the $\alpha^A_{A/B}$ and $\alpha^B_{B/A}$ values increase. Therefore, both $\alpha^A_{A/B}$ and $\alpha^B_{B/A}$ are limited to a maximum of about 100.

It is preferable from the industrial viewpoint that, for membrane $M_A$, flux $L^A$ is not less than 20 $g/m^2 \cdot hr$ and, for membrane $M_B$, flux $L^B$ is not less than 20 $g/m^2 \cdot hr$. Particularly, each of $L^A$ and $L^B$ should be not less than 50 $g/m^2 \cdot hr$, especially not less than 100 $g/m^2 \cdot hr$. Whereas larger $L^A$ and $L^B$ values are preferable,

the separation factors $\alpha^A_{A/B}$ and $\alpha^B_{B/A}$ tend to decrease as $L^A$ and $L^B$ increase. Therefore, both $L^A$ and $L^B$ are limited to a maximum of about 20,000 $g/m^2 \cdot hr$.

The separation factors $\alpha^A_{A/B}$ and $\alpha^B_{B/A}$ and fluxes $L^A$ and $L^B$ as mentioned herein mean the respective values obtained in the following manner:

Separation factors $\alpha^A_{A/B}$ and $\alpha^B_{B/A}$: Values obtained by carrying out pervaporation under the conditions of $[A]/[B]$ = 50/50, with a pressure on the reduced pressure side of less than 35 mmHg (4.7 kPa) and a temperature of 25°C;

Fluxes $L^A$ and $L^B$: Total amounts of components A and B that have permeated the respective membranes per unit area per unit time (thus in $g/m^2$ hr) as measured on the occasion of the above-mentioned separation factor determination.

Therefore, these values do not mean the values in each individual procedure in the practice, nor do they mean those separation factor and flux values different from the values defined above that may be obtained by carrying out pervaporation under conditions different from those mentioned above or by carrying out other processes such as hydraulic permeation and perstruction.

It is usual in the practice of the invention that one of membranes $M_A$ and $M_B$ should have an active layer composed of a hydrophobic material and permeable to less polar components (this membrane is called a positive membrane) and the other should have an active layer composed of a hydrophilic material and permeable to more polar components (this membrane is called a negative membrane).

The positive membrane includes a membrane made up of a hydrophobic material (i.e. an active layer) and a composite membrane composed of a hydrophobic material layer (active layer) and a hydrophilic material layer (substrate layer). In the latter case, the mixed liquid to be treated comes into contact with the hydrophilic material layer.

The membrane composed of a hydrophobic material may be a membrane made up of a polyolefin (e.g. polyethylene, polypropylene), polyacrylonitrile, a polyisoprene, a polyester, polystyrene, polytetrafluoroethylene, or a copolymer thereof, or a rubber membrane such as a silicone rubber membrane, a nitrile rubber (NBR) membrane or a fluororubber membrane. Inorganic fillers such as silica may optionally be incorporated into the hydrophobic material membrane.

Among these, the silicone rubber membrane is preferable because of adequate separation factor and flux values obtainable therewith. This membrane is required to have a nonporous active layer and includes a nonporous homogeneous membrane wholly consisting of a nonporous layer (active layer) and a nonporous heterogeneous membrane consisting partly (one or both of the surface layers of the membrane) of a nonporous layer or layers and partly (remaining portion) of a porous layer. This membrane may optionally be used with a porous membrane stuck to it.

The thickness of the positive membrane is about 0.1 to 500 microns, preferably about 5 to 3 00 microns. A smaller thickness than 0.1 micron will result in an insufficient membrane strength or in an inadequate durability.

and a greater thickness than 500 microns will result in a decreased flux of the mixed liquid permeating through the membrane, so that the membrane will be impracticable.

The composite membrane composed of a hydrophobic material layer (active layer) and a hydrophilic material layer (substrate layer) includes a composite membrane having a hydrophobic polymer layer and a hydrophilic polymer layer.

The hydrophilic polymer includes, among others, a mixture of polyvinyl alcohol (PVA) and at least one hydrophilic polymer which contains an amide group, especially an N-alkylamide group, such as polyvinylpyrrolidone, polyvinylpiperidone, polyvinylpyridone, polyvinyl-N-methylacetamide or poly-N,N-dialkylacrylamide ( the alkyl being lower alkyl such as methyl, ethyl or propyl ) or PVA or a cellulosic polymer ( e.g. cellulose, carboxymethylcellulose, cellulose acetate ).

For producing the effect of the present invention more distinctly, especially suited among these are mixed material layers made up of an amide-group-containing, preferably N-alkylamide-group-containing, hydrophilic polymer and PVA. Among the N-alkylamide group-containing hydrophilic polymers, polyvinylpyrrolidone produces the best effects.

For obtaining adequate layers from a mixture of an amide-group-containing, preferably N-alkylamide-group-containing, hydrophilic polymer and PVA, 20-80 weight %, preferably 30-70 weight %, of PVA is mixed with 80-20 weight % of the (N-alkyl)amide-group-containing hydrophilic polymer. In making such layers, a third component may optionally be added to those components.

The PVA usable in the practice of the invention includes, among others, PVA species having an average degree of polymerization of 500-3,500, preferably 1,500-3,500, and a saponification degree of 85-100 mole %, preferably 95-100 mole %, saponification products from copolymers of ethylene, vinylpyrrolidone, vinyl chloride, etc. with a vinyl ester such as vinyl acetate, and modified PVA species obtained by reaction with a chemical such as an aldehyde. When to be used in admixture with an amide-group-containing, preferably N-alkylamide-group-containing, hydrophilic polymer, especially polyvinylpyrrolidone, those conventional PVA species which have an average degree of polymerization of 500-3,500 and a saponification degree of 85-100 mole % are more suited. In making membranes, a polyhydric alcohol such as glycerol may optionally be added to PVA.

For making up the hydrophobic polymer layer of the composite membrane, the hydrophobic polymers mentioned previously may be used. However, a silicone rubber layer (e.g. from a crosslinkable two-component silicone rubber system or a one-component silicone rubber) is preferable. When adhesion to the hydrophilic polymer layer, membrane-forming property and other properties are taken into consideration, a room-temperature-crosslinkable, one-component silicone rubber system in solution is very suited. Typical of the silicone rubber is a polysiloxane having the bonding $-\overset{\displaystyle |}{\underset{\displaystyle |}{Si}}-O-\overset{\displaystyle |}{\underset{\displaystyle |}{Si}}-$. In the practice of the invention, such a silicone rubber, when used as the hydrophobic polymer, produces the best effect. In addition to the silicone rubber, other hydrophobic polymers or rubbers commonly known in the art may also be used. Inorganic fillers such as silica may optionally be incorporated into the silicone rubber for making membranes.

The composite membrane has a hydrophilic polymer layer and a hydrophobic polymer layer, both layers being nonporous.

Such a composite membrane may be prepared, for example, by causing a hydrophobic polymer to be taken up by the surface of a nonporous hydrophilic polymer membrane, by causing a hydrophilic polymer to be taken up by the surface of a nonporous hydrophobic polymer membrane, by sticking a nonporous hydrophilic polymer membrane and a nonporous hydrophobic polymer membrane together or by coextruding a hydrophobic polymer and a hydrophilic polymer. The composite membrane may optionally be used with a porous membrane stuck to it.   Also, a porous layer may optionally be provided between the nonporous hydrophobic polymer layer and the nonporous hydrophobic polymer layer.   The term "nonporous layer" as used in referring to the nonporous hydrophilic polymer layer and the nonporous hydrophilic polymer layer means either a nonporous homogenous layer consisting wholly of a nonporous layer or a nonporous heterogeneous layer consisting partly (one side or both sides of the layer) of a nonporous component layer or layers and partly (remaining portion) of a porous component layer.   In preparing a composite membrane by combining two heterogeneous layers or combining a homogeneous layer and a heterogeneous layer, it is preferable to stick them together with the nonporous surface of one layer facing toward the nonporous surface of the other. In doing so, such pinhole formation as is encountered in the case of sticking with a nonporous surface facing to a porous surface can be avoided, since the sticking surfaces are both nonporous.

The thickness of the above-mentioned composite membrane to be used in accordance with the invention is about 0.1 micron to 500 microns, preferably about 5 to 300 microns.   Smaller thicknesses than 0.1 micron will result in insufficient membrane strength or durability.   Greater thicknesses than 500 microns will result in a reduced flux of the mixed liquid permeating through the membrane, rendering the membrane impracticable. When the composite membrane is used with a porous membrane (e.g. microporous membrane) stuck to it, smaller thicknesses may be sufficient to secure an adequate degree of durability. In this case, the composite membrane thickness may be about 0.1 to 50 microns. The above-mentioned hydrophobic membrane and composite membrane each may have a flat plate form (flat membrane), or preferably a cylindrical form, especially a hollow fiber membrane form, which can have an enlarged membrane surface.

The above-mentioned composite membrane composed of a nonporous hydrophobic polymer layer and a nonporous hydrophilic polymer layer is distinctly different from the conventional membranes in that the separation factor in separation of mixed liquids is markedly increased, or that, depending on the direction in which a mixed liquid is allowed to permeate the composite membrane (from one face or the other), the kind of the permeating liquid or the separation factor is different. Thus, when the mixed liquid to be separated comes into contact with the nonporous hydrophilic polymer layer of the composite membrane, the component liquid which can permeate the membrane is the less polar one. Conversely, when the mixed liquid is in contact with the nonporous hydrophobic polymer layer, the permeating liquid is the more polar component.

Such composite membrane also has the following advantages. In the case of a single layer membrane made up of a hydrophobic polymer such as a silicone rubber, the membrane thickness can be reduced only to a limited extent because of insufficient mechanical strength of the silicone rubber. In such a case, a nonporous hydrophilic polymer layer (especially a nonporous layer composed of a mixture of PVA and an N-alkylamide-group-containing hydrophilic polymer such as mentioned above), when attached to the silicone rubber layer, will serve as the substrate layer and reinforce the silicone rubber layer, rendering it possible to further reduce the thickness of the silicone rubber layer adhering to the substrate layer without any breakage of the layer, and to increase the flux as a result of the thickness reduction. Since the silicone rubber layer is attached to the nonporous surface of the hydrophilic polymer layer, such pinhole formation as is encountered upon adhesion to a porous layer will not take place. Furthermore, when a mixed liquid to be treated is brought into contact with the nonporous hydrophilic polymer layer of the thus-reinforced membrane, the nonporous hydrophilic polymer layer becomes swollen with the mixed liquid so that the mixed liquid can easily penetrate the nonporous hydrophilic polymer layer to the silicone rubber layer. Accordingly, treatment of a mixed liquid with such a composite membrane will result in an increase in flux which corresponds to the reduction in silicone rubber layer thickness as compared with the simple silicone rubber membrane, without causing any decrease in separation factor.

The negative membrane includes, among others, a membrane made up of a hydrophilic material (active layer) or a composite membrane composed of a hydrophobic material layer and a hydrophilic material layer (active layer). The mixed liquid to be treated is brought into contact with the hydrophobic material layer. Like the previously mentioned positive membrane, the nagative membrane is required to have a nonporous active layer, and the membrane structure of the negative
membrane is either a nonporous homogeneous one or a nonporous
heterogeneous one.

The membrane made up of a hydrophilic material as
mentioned herein means a membrane made up of polyvinyl
alcohol (including vinyl alcohol copolymers such as saponification products from ethylene-vinyl acetate copolymers, for
instance), cellulosic polymers (e.g. cellulose, carboxymethylcellulose, cellulose acetate) or a mixture of polyvinyl
alcohol and an amide-group-containing, preferably N-alkylamide-
group-containing, hydrophilic polymer, among others.

Among these, preferred are membranes made up of a
mixture of polyvinyl alcohol and an amide-group-containing
hydrophilic polymer because of very satisfactory permeability
and flux values obtainable therewith.

The amide-group-containing, preferably N-alkylamide-group-
containing, hydrophilic polymer includes, among others,
polyvinylpyrrolidone, polyvinylpiperidone, polyvinylpyridone,
poly-N,N-dialkylacrylamide (the alkyl being lower alkyl such
as methyl, ethyl or propyl) and polyvinyl-N-methylacetamide.
Among these, preferable is polyvinylpyrrolidone. The
polyvinyl alcohol (PVA) includes, among others, those species
which have an average degree of polymerization of 500-3,500,
preferably 1500 - 3500, and a degree of saponification
of 85-100 mole %, preferably 95-100 mole %; saponification
products from copolymers of a vinyl ester such as vinyl acetate
and a comonomer such as ethylene, vinylpyrrolidone or vinyl
chloride; and PVA species modified by reaction with a chemical
reagent such as an aldehyde.

The mixture of PVA and an amide-group-containing, preferably N-alkylamide-group-containing, hydrophilic polymer preferably contains 20-80 weight % of PVA and 80-20 weight % of the amide or N-alkylamide-group-containing hydrophilic polymer. More desirably, the mixture contains 30-70 weight % of PVA. Desired separation factor and flux values can be obtained by varying the mixing ratio within the above-specified range. When the PVA content in the liquid-liquid separation membrane exceeds 80%, the flux decreases to an extreme extent in spite of an increase in separation factor, and the membrane becomes impracticable. When the PVA content is less than 20%, a very great flux value can be obtained but the separation factor is extremely low, and the membrane is no more practicable. In making membranes from such a mixture, there can be used such a method as the casting method, dry and/or wet method, or other methods. Furthermore, heat treatment may improve the performance characteristics of the membrane as a separation membrane. Such heat treatment is carried out at 80-230°C for 0.1-20 minutes.

The above-mentioned membrane made of a hydrophilic material to be used in the practice of the invention is a nonporous homogeneous membrane or a nonporous heterogeneous membrane and has a thickness of about 0.1 micron to 500 microns, preferably 5 microns to 300 microns. A smaller thickness than 0.1 micron will result in an insufficient membrane strength or durability. When the membrane thickness is greater than 500 microns, the flux of the liquid mixture will be too small for the membrane to be practicable. Nevertheless, when this membrane is optionally used with a porous membrane stuck to it, this membrane may have a further reduced thickness, preferably 0.1 to 50 microns.

The composite membrane to be used as the negative membrane and composed of a hydrophobic material layer and a hydrophilic material layer (active layer) means a composite membrane having a hydrophilic polymer layer and a hydrophobic polymer layer, in which both layers are nonporous.

The composite membrane having a nonporous hydrophobic polymer layer and a nonporous hydrophilic polymer layer has the same structure as the above-mentioned positive membrane. However, when such composite membrane is used as the negative membrane, it is necessary to operate in such a manner that the mixed liquid to be treated is brought into contact with the hydrophobic polymer layer.

In addition to the above-mentioned membranes, a composite membrane prepared by placing a hydrophilic polymer (e.g. polyvinyl alcohol, ethylene-vinyl alcohol copolymer, cellulosic polymer) layer on a substrate layer made up of a mixture of polyvinyl alcohol and an amide-group-containing hydrophilic polymer may also be used as the negative membrane.

Like the positive membrane, the negative membrane may have the form of a flat, cylindrical or hollow fiber membrane. A hollow fiber membrane form is preferable.

Referring to the above negative membrane as well as the positive membrane, the "nonporous layer" (active layer) means a layer through which particles having a size of the order of a molecule size substantially can pass.

The "mixed liquid" as used herein means a mixed liquid containing at least two components A and B different in polarity. By the phrase "different in polarity," a relative difference in polarity is meant. Therefore, even a mixed liquid in which components A and B are both polar can be separated into the components if they are different in the degree of polarity. Likewise, even a mixed liquid consisting of relatively less polar components A and B can be treated successfully if there is a difference in polarity between the components. The relatively more polar component in a mixed liquid is herein referred to as the "more polar component" and the relatively less polar component therein as the "less polar component." Specific examples of the mixed liquid are azeotropic mixtures and mixtures in which the components have boiling points close to each other. The following are examples of the azeotropic mixtures: Two-component azeotropic mixtures such as water-organic substance (e.g. ethanol, allyl alcohol, propionic acid, propyl alcohol, isopropyl alcohol, methyl ethyl ketone, isobutyric acid, ethyl acetate, vinyl acetate, ethyl ether, butyl alcohol (normal, secondary or tertiary), isobutyl alcohol, isoamyl alcohol, amyl alcohol, furfuryl alcohol, tetrahydrofuran, dioxane, cyclopentanol, other alcohols) azeotropes, and furthermore such organic mixture systems as acetic acid-organic substance (e.g. chlorobenzene, benzene, toluene, m-xylene) mixtures, methanol-organic substance (e.g. acetone, methyl acetate, ethyl acetate, vinyl acetate, n-pentane, benzene, cyclohexane, n-hexane) azeotropes, and other organic substance-organic substance mixtures (e.g. acetone-chloroform azeotrope). Besides the above-mentioned azeotropes, there may also be mentioned mixed liquids which can be separated into constituents only with difficulty, such as water-acetic acid, and furthermore mixed liquids which are separable into constituents by usual distillation, such as water-methanol and water-acetone.

The method of the invention is particularly efficient when applied to mixed liquid composed of a lower fatty acid ester such as methyl acetate and a lower aliphatic alcohol such as methanol, mixed liquid composed of water and a lower aliphatic alcohol such as ethanol, or mixed liquid of water and a lower fatty acid such as acetic acid. The weight ratio between component A and component B in the mixed liquid to be treated is not critical in practising the present invention. However, the content of A in the mixed liquid to be introduced into the first module where component A is the permeating component is preferably 10-50 weight %. The method of the invention is also applicable to the treatment of a mixed liquid which contains a third component (e.g. component C) in addition to components A and B. In such a case, those two components that are close in polarity to each other are first separated from the remaining component remote in polarity from the other components and then the two components close in polarity to each other are separated from each other.

Supplementation of energy to cause permeation of liquid through membranes in the practice of the invention can be effected by applying to membranes $M_A$ and $M_B$ any of known energy supplementation methods for use in liquid separation processes using membranes, such as hydraulic permeation, pervaporation, thermopervaporation and perstruction processes.

Among these processes, suited are pervaporation and hydraulic permeation processes.

In the case of pervaporation, it is essential that the inside or outside of the separation membrane with which the mixed liquid is in contact is under a lower pressure as compared with the opposite side. A greater pressure difference is more effective. However, from the industrial viewpoint, the pressure difference is preferably 0.01-50 and more particularly 0.5-1 atmospheres (bars). The pressure on the side where the mixed liquid is in contact with the membrane is preferably from atmospheric pressure to 100 atmospheres (bars), more preferably atmospheric pressure or the vicinity thereof. The pressure on the opposite side is generally 50 atmospheres (bars) or below, preferably not higher than the atmospheric pressure, especially under reduced pressure not higher than 400 mmHg (0.53 bar) and particularly not higher than 100 mmHg (0.13 bar). The component that has permeated the membrane may be collected on the lower pressure side either in the liquid form or in the gaseous form. However, collection in the gaseous form after evaporation on the lower pressure side results in improvement in separation efficiency as well as in flux. Therefore, it is preferable to maintain the lower pressure side at a pressure lower than the vapor pressure of the component permeating the membrane. Such a low pressure can be maintained either by evacuation for producing a reduced pressure or by introducing an inert gas for keeping the vapor pressure at a low level. It is not necessary to cause a liquid to flow on the low pressure side.

The temperature range within which the separation method in accordance with the invention is to be carried out is not particularly limited unless coagulation or decomposition of the mixed liquid or denaturation of the membranes takes place. Nevertheless, a preferred temperature range is 0-100°C.

In carrying out a hydraulic permeation process, the pressure on the side where the mixed liquid comes into contact with the membrane is preferably 10-100 atmospheres (bars) and the pressure on the other side is preferably atmospheric pressure.

In the practice of the invention, the energy supply for permeation through membrane $M_A$ and that for permeation through membrane $M_B$ may be effected by the same method or by different methods. For example, both membrane $M_A$ and membrane $M_B$ may be operated by the pervaporation method, or both membrane $M_A$ and membrane $M_B$ by the hydraulic permeation method, or both membrane $M_A$ and membrane $M_B$ by the perstruction method, or membrane $M_A$ by the hydraulic permeation method and membrane $M_B$ by the pervaporation method. When the fraction which has permeated membrane $M_A$ occurs as a gas (or vapor), the gas may be condensed and then treated in the liquid form by means of membrane $M_B$ or the gas as it is, without effecting condensation, may be treated with membrane $M_B$. As compared with the use of the pervaporation method for each of membranes $M_A$ and $M_B$, the combined use of the hydraulic permeation method and the pervaporation method such that membrane $M_A$ is operated by the former and membrane $M_B$ by the latter may be convenient especially in that condensation of the fraction which has permeated membrane $M_A$ is not always required.

In the accompanying drawings,

Fig. 1 is a flowchart illustrating the principle of the method in accordance with the invention;

Fig. 2 is a flowchart illustrating a mode of practice, namely a first pervaporation process, in accordance with the invention;

Fig. 3 is a flowchart illustrating a second pervaporation process in accordance with the invention;

Fig. 4 is a flowchart illustrating a further pervaporation process in accordance with the invention;

Fig. 5 schematically shows in section a module (first and/or second) for use in the practice of the invention;

Fig. 6 schematically shows in section another module (first and/or second) for use in the practice of the invention;

Fig. 7 is a flowchart illustrating a further pervaporation process in accordance with the invention; and

Fig. 8 is a flowchart illustrating yet another pervaporation process in accordance with the invention.

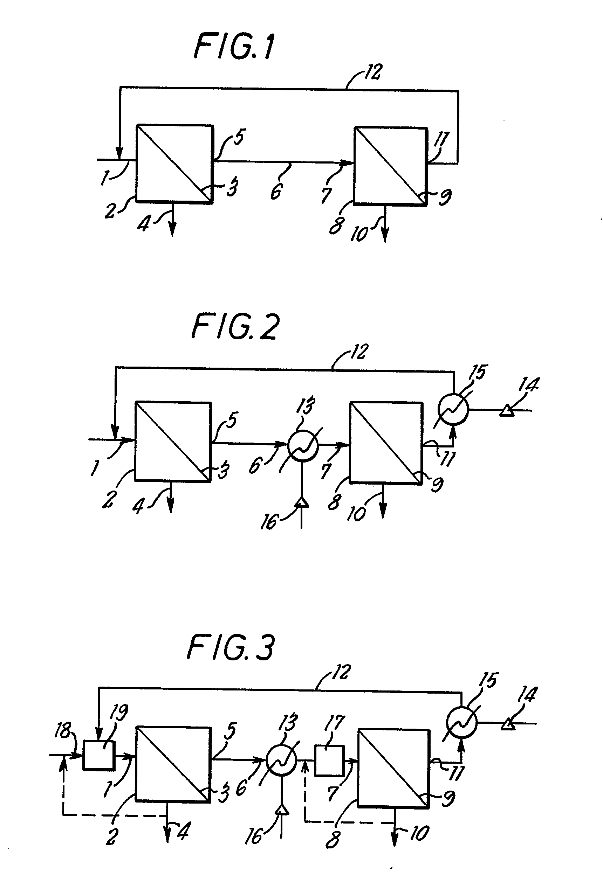

In Fig. 1, a first module 2 contains membrane $M_A$ 3 and also has an inlet 1 for the mixed liquid, an outlet 4 for the fraction that has not permeated membrane $M_A$ 3 (first nonpermeating fraction) and an outlet 5 for the fraction that has permeated membrane $M_A$ (first permeating fraction). A second module 8 contains membrane $M_B$ 9 and has an inlet 7 for the first permeating fraction, an outlet 10 for the fraction that has not permeated membrane $M_B$ 9 (second nonpermeating fraction) and an outlet 11 for the fraction that has permeated membrane $M_B$ 9 (second permeating fraction). The outlet 5 for the first permeating fraction and the inlet 7 for the first permeating fraction are connected with each other by a passageway 6. The outlet 11 for the second permeating fraction and the inlet 1 for the mixed liquid are connected with each other by a passageway 12 for recycling. Provision of the recyling passageway or circuit is in many cases desirable but in some cases unnecessary.

The devices shown in Fig. 2 and Fig. 3, when operated in the manner of pervaporation, are preferably mixed liquid separators.

Referring to Fig. 2, the first permeating fraction which has permeated membrane $M_A$ 3 and is in the gaseous form is led, under the suction of vacuum pump 16, to a means 13 for condensation (condenser or device capable of functioning as a condenser) and the condensate liquid is introduced into the second module 8. The second permeating fraction which has permeated membrane $M_B$ 9 and is in the gaseous form is led, under the suction of vacuum pump 14, to a condensation means 15 and the condensate liquid is recycled.

Referring to Fig. 3, heating devices 19, 17 are provided before the first module 2 and the second module 8, respectively. The mixed liquid is first introduced via 18 into the heater 19 and then into the first module, and the first permeating fraction is first introduced into the heater 17 and then into the second module. A part of each of the first and second nonpermeating fractions may be recycled, as shown by the broken lines. In pervaporation, vaporization of the fraction which has permeated the membrane is essential, as mentioned previously. Since the latent heat of vaporization required is generally very great as compared with the sensible heat, a considerable quantity of energy is consumed in vaporization and accordingly the temperature of the liquid drops and the viscosity of the liquid increases (the liquid may be frozen in certain cases). The heaters 19, 17 are used for prevention of such a situation. The liquid mixture temperature to be attained by heating is desired to be as high as possible but must be lower than the boiling point of the liquid.

The heaters are preferably located before the first and the second module, respectively. However, it is also possible to heat the first and second modules by means of steam jackets, for instance.

Fig. 5 shows an embodiment of the module (first and/or second). In this embodiment, the module is separated by the above-mentioned separation membrane 31 into a mixed liquid chamber 32 and an exhaust chamber 33. The mixed liquid to be treated (concentrated or separated) is introduced into the mixed liquid chamber via the inlet 35 and taken out through the outlet 34. The exhaust chamber 33 is maintained at a reduced pressure by an appropriate means, or some other liquid or a gas is circulated through it. In the figure, 36 is a support for the membrane (e.g. sintered stainless steel plate) and 37 indicates an outlet for the vapor fraction which has permeated the membrane.

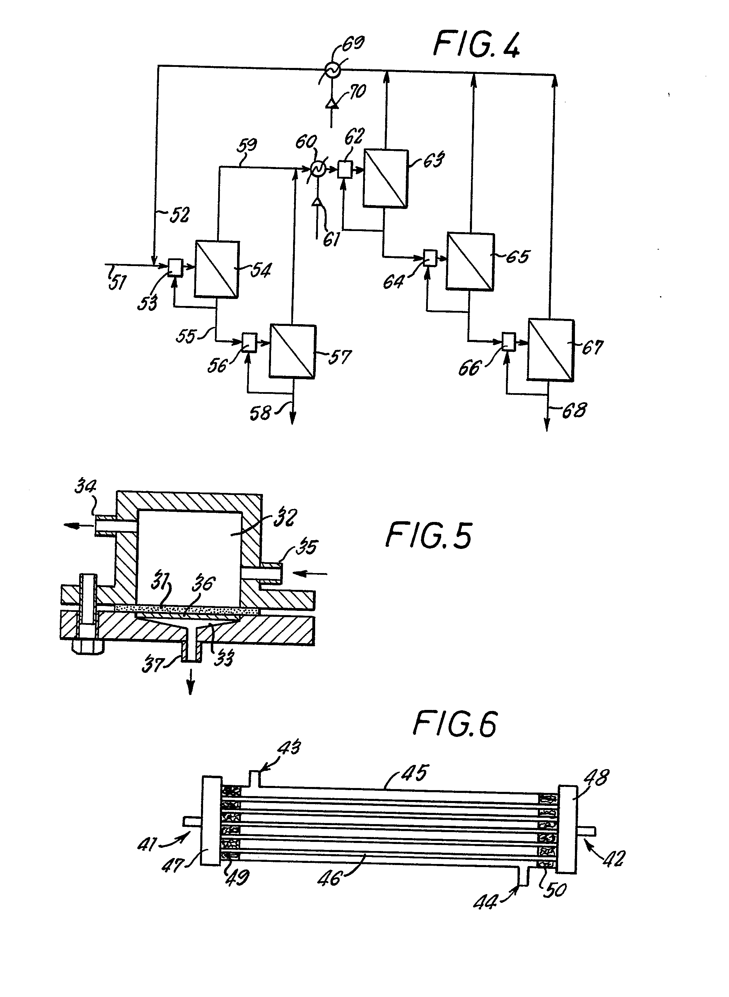

Fig. 6 illustrates another embodiment of the module (first and/or second). In this embodiment, hollow fiber bundles 46 the end portions of which are fixed by fixing members 49, 50 with the both ends of each hollow fiber opened are placed in a box 45 having header chambers 47, 48 at both its ends. The header chamber 47 has an inlet 41 for the mixed liquid (or an outlet 41 for the permeating fraction) and the header chamber 48 has an outlet 42 for the mixed liquid (or for the permeating fraction). The box 45 has outlets 43, 44 for the permeating fraction (or an inlet 43 and outlet 44 for the mixed liquid).

Referring to Fig. 4 and taking an ethanol-water mixture by way of example, a mode of separation is explained below.

A mixture of water (more polar) and ethanol (less polar) is introduced into the first module (membrane separator) 54 containing a negative membrane. The permeation of water prevails there and ethanol is rejected, whereby fractionation is effected. The fraction which has permeated the membrane (water-enriched ethanol) is led through a line 59 to membrane separator 63, which contains a positive membrane. In the second module 63, the permeation of ethanol prevails and water is rejected, so that fractionation is effected. The fraction rejected by the membrane in separator 63 (water-enriched ethanol) is then led to other second modules (positive membrane separators) 65, 67 successively for fractionation treatment in the same manner. The liquid fraction rejected by the membrane in the last positive membrane separator 67 is highly concentrated water, which is recovered through 68. Each of the permeating fractions coming out of the second modules 63, 65, 67 contains ethanol and is returned to the feed line leading to a preceding separator. According to the mode of practice shown in Fig. 4, all the said permeating fractions are returned to the first membrane separator, but the mode of return is not limited to that. On the other hand, the liquid which has been rejected by the membrane in the first module (negative membrane separator) 54, namely ethanol-enriched water, is fed, through a line 55, to the next first module (negative membrane separator) 57 and fractionated there in such a manner that ethanol is rejected. In this manner, the rejected liquid fraction from negative membrane separator 54 is further treated in one or more stages with a negative membrane or membranes. From the last negative membrane separator 57, there is withdrawn, via 58, highly concentrated ethanol as the rejected fraction.

In Fig. 4, 53, 56, 62, 64 and 66 are heaters, 60 and 69 are condensers, 61 and 70 are vacuum pumps, 51 is a mixed liquid feed line, and 52 is a recycling liquid line.

The fraction which has permeated the negative membrane of separator 57 is a water-ethanol mixture. Therefore, it is desirable to send said fraction to the feed line leading to one of the positive membrane separators where the liquid to be treated has a concentration close to the concentration which said fraction has. In the embodiment shown in Fig. 4, said fraction is fed to separator 63, but the manner of feeding said fraction is not limited to that. In said embodiment, there are only two negative membrane separators. However, three or more negative membrane separators may be used as necessary. Likewise, one or more further positive membrane separators may be used in addition to separators 63, 65 and 67. When two or more negative membrane separators and two or more positive membrane separators are operated in this manner in respective multistage systems, more substantial

separation of components A and B from each other can be achieved. The number (n) of negative membrane separators and that of positive membrane separators in such a multistage operation are each n = 2 - 20, preferably n = 2 - 10.

When the concentration of component A (permeating fraction in the first module) in the mixed liquid to be treated is great, for instance about 50 weight %, it is sometimes preferable to reduce the concentration of component A, for example to 10-50 weight % or, if the mixed liquid has an azeotropic point, to a concentration close to the concentration in the azeotrope, by subjecting the mixed liquid to a conventional distillation process before introducing it into the first module.

Furthermore, in accordance with the present invention, such an embodiment as is mentined below is also possible. As described hereinbefore, the system for separation of mixed liquid in accordance with the invention may use a composite membrane composed of a nonporous hydrophobic polymer layer and a nonporous hydrophilic polymer layer. Such a membrane may act as a positive membrane on one occasion and as a negative membrane on another depending upon which surface is in contact with the liquid to be treated. The use of such a dually active membrane which is anisotropic as to permeability makes it possible to achieve a sufficiently high degree of separation with only one kind of membrane used in the mixed liquid separation system, even if the membrane is so poor in performance characteristics that it is quite unusable in the conventional separation methods which use a single membrane. Furthermore, it is possible to allow the mixed liquid to permeate a composite membrane from one side with the permeating fraction being stocked for a while and then allow the permeating fraction to permeate the same membrane from the other side. In that case, backwashing is not always requird, or in other words, backwashing is achieved in the actual separation operation; hence a great industrial advantage is enjoyable. In a completely continuous separation system using membranes, two membrane modules containing the same membrane are used in a manner such that the liquid is allowed to permeate the first module from the first surface of the membrane and the permeating fraction is led to the second module where the fraction is allowed to permeate the membrane from the second surface side. In this case, too, backwashing can be effected, without effort and without unnecessary loss in time due to suspension of operation, by turning valves after the lapse of an appropriate time period so as to make the mixed liquid and the permeating fraction flow through the first and the second module, respectively, in the reverse direction. The utility of the invention in industrial separation systems using membranes is thus clear.

One of the other advantages obtainable in accordance with the above mentioned mode is that the use of only one kind of membrane facilitates maintenance and design of the membrane system as compared with the use of a plurality of membranes different in kind.

The dually active membrane usable in the above mode is, for example, a composite membrane prepared by coating a nonporous hydrophilic polymer membrane made of a 1:2 polyvinyl alcohol-polyvinylpyrrolidone mixture with a silicone resin layer. When a mixture of methyl acetate and methanol is brought into contact with the polyvinyl alcohol-polyvinylpyrrolidone surface of said composite membrane, the permeation of methyl acetate selectively prevails. When the mixture is brought into contact with the silicon layer, the membrane is selectively more permeable to methanol. If methyl acetate is assumed to be component A and methanol to be component B, then the separation factor defined is

$$\alpha^A_{A/B} = 2.55 \ (\text{flux } L^A = 3.55 \ \text{kg/m}^2 \cdot \text{hr})$$

for the case where the mixed liquid is allowed to permeate from the polyvinyl alcohol-polyvinylpyrrolidone surface, or

$$\alpha^B_{B/A} = 2.64 \ (\text{flux } L^B = 1.21 \ \text{kg/m}^2 \cdot \text{hr})$$

for the case where the permeation is effected in the reverse direction, namely from the silicone side.

Any other membranes (dually active membranes) which show different permeabilities to mixed liquids to be treated depending on which surface is to come into contact therewith may be used in the practice of the invention, for instance a membrane prepared by applying a hydrophobic silicone to one surface of an active carbon-containing cuprophane membrane (nonporous hydrophilic membrane).

The following description will further clarify the principle of "high efficiency separation" which is one of the important features of the mixed liquid separation method in accordance with the invention.

Control.: In a test run using the above-mentioned polyvinyl alcohol-polyvinylpyrrolidone mixture-silicone composite membrane in a conventinal single membrane system for treating a methyl acetate-methanol mixture (weight ratio 1:1), the permeating fraction consisted of 72 weight % of methyl acetate and 28 weight % of methanol when the mixed liquid was brought into contact with the polyvinyl alcohol-polyvinylpyrrolidone surface. When permeation was effected from the silicone side, the permeating fraction consisted of 73 weight % of methanol and 27 weight % of methyl acetate. The mixed liquid thus showed a tendency to separate into the two components but at most to concentrations of no more than 72%, which are too low for the system to be put to practical or industrial use. Therefore, such a membrane has to be judged to be a "low performance membrane" for use in the conventional single membrane systems.

Even if the separation procedure is conducted in two stages each using a conventional separation system with such a membrane (i.e. the same procedure is repeated twice), the separation efficiency will not be increased significantly.

In test runs performed in the manner mentined above, the following data were obtained:

(1) When the mixed liquid was fed to the polyvinyl alcohol-polyvinylpyrrolidone surface side (pervaporation under pressure reduction to 35 mmHg (4.7 kPa)):

Mixed liquid: Methyl acetate 50 weight %
(methanol 50 weight %)

First permeating liquid: Methyl acetate 72 weight %

Second permeating liquid: Methyl acetate 87 weight %

(2) When the mixed liquid was fed to the silicone surface side (pervaporation under pressure reduction to 35 mmHg (4.7 kPa)):

Mixed liquid: Methanol 50 weight %
(methyl acetate 50 weight %)

First permeating liquid: Methanol 73 weight %

Second permeating liquid: Methanol 84 weight %

It should be noted that, in the above test runs, the liquids to be treated were fed to the first and the second stage in the same direction as to the membrane surface, hence said runs were performed in accordance with the control.

The following examples illustrate the invention in some detail.

## Example 1

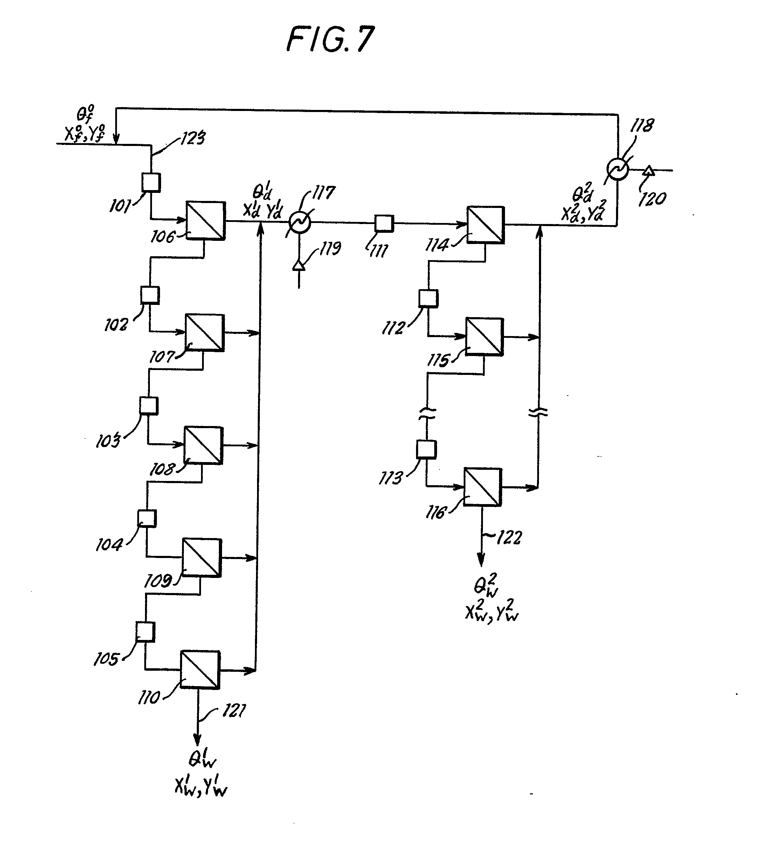

In this example, a separation system (as shown in Fig. 7) in accordance with the invention is illustrated. The system comprised the first module consisting of 5 module units and the second module consisting of 1ℓ module units. Each of the module units was of the type shown in Fig. 6. The first module units contained a hollow fiber membrane composed of a silicone rubber and the second module units contained a hollow fiber composed of a mixture of polyvinyl alcohol-polyvinylpyrrolidone (2 : 1; weight ratio). The polyvinyl alcohol used PVA 117, a product of Kuraray Co., Ltd. The polyvinylpyrrolidone was a product of Kishida Chemical Co., Ltd. and its molecular weight was 360,000. The silicone rubber hollow fiber was a true circle and nonporous and had the inside diameter of 400 microns and the outside diameter of 520 microns, thickness of 60 microns. The polyvinyl alcohol-polyvinylpyrrolidone hollow fiber was a true circle and nonporous and had the inside diameter of 50 microns and the outside diameter of 150 microns, thickness of 50 microns.

Separation factors $\alpha^A_{A/B}$ and $\alpha^B_{B/A}$ and fluxes $L^A$ and $L^B$ of the silicone rubber membrane and polyvinyl alcohol-polyvinylpyrrolidone membrane respectively under the conditions of $[\text{Methyl acetate}]_A/[\text{Methanol}]_B = 50/50$, pressure on the reduced pressure side of 35 mmHg and temperature of 25°C are 4.01, 7.10, 0.763 kg/m²·hr, 0.120 kg/m²·hr, respectively.

The effective hollow fiber membrane length within the module was 800 mm. The total membrane area of the first module (calculates for the outside surface area) was 0.25 m² (5 cylidrical module units) and the total membrane area of the second module was 0.95 m$^2$ (19 cylindrical module units).

The cylinder of each module unit was made of stainless steel and had, as shown in Fig. 6, on inlet/outlet 41 and an outlet 42 each communicating with the inside of the hollow fiber membrane, and outlets 43 and an outlet 44 each communicating with the outside of the fiber.

In each unit module belonging to the first and the second module, the mixed liquid (methyl acetate-methanol mixture; weight ratio. 3 : 7) or a mixture thereof with the liquid from the preceding unit was fed through inlet 41 and the nonpermeating fraction was taken out through outlet 42. The fraction permeating the hollow fiber membrane was taken out through outlets 43 and 44. Outlets 43 and 44 were connected to a piping in which the pressure was maintained at 30 mmHg.

The feed liquids to the first and the second module, respectively, were heated to 30°C before entering the respective module unit. The permeating fractions (vapors) were condensed using multistage refrigerators.

To the above-mentioned separation system using membranes, there was fed a mixed liquid composed of 30 % methyl acetate ($X_f^0$ = 30 % by weight) and 70 % methanol ($Y_f^0$ = 70 %) at the flow rate of $Q_f^0$ = 0.10 kg/hr. The total quantity of the liquid flowing out of the first module was $Q_w^1$ = 0.072 kg/hr, and the composition of the liquid was: methanol $Y_w^1$ = 95.4 %, methyl acetate $X_w^1$ = 4.6 % (by weight). The total quantity of the liquid flowing out of the second module was $Q_w^2$ = 0.028 kg/hr, and the composition was: methyl acetate $X_w^2$ = 95.3 % and methanol $Y_w^2$ = 4.7 % (by weight). The total quantity of the fraction which permeated the first module membrane was

$Q_d^1$ = 0.115 kg/hr and the composition was methyl acetate
$X_d^1$ = 41.6 % and methanol $Y_d^1$ = 58.4 % (by weight), and the
total quantity of the fraction permeating the second module
membrane was $Q_d^2$ = 0.087 kg/hr and the composition of methyl
acetate $X_d^2$ = 24.4 % and methanol $Y_d^2$ = 75.6 % (by weight).
Thus, in this test run, the 3 : 7 methyl acetate-methanol
mixture could be separated into the components each to the
purity of 95 %.

Referring to Fig. 7, 123 is a feed line for the mixed
liquid, 101 to 105 are heaters, 106 to 110 are
first module units, 111 to 113 are heaters, 114 to
116 are second module units (16 module units between module
115 and module 116 not shown), 117 and 118 are condensers,
119 and 120 are vacuum pumps. 121 is an outlet passageway
for the first nonpermeating liquid fraction, from the first
module, and 122 is an outlet passageway for the second
nonpermeating fraction from the second module.

### Example 2

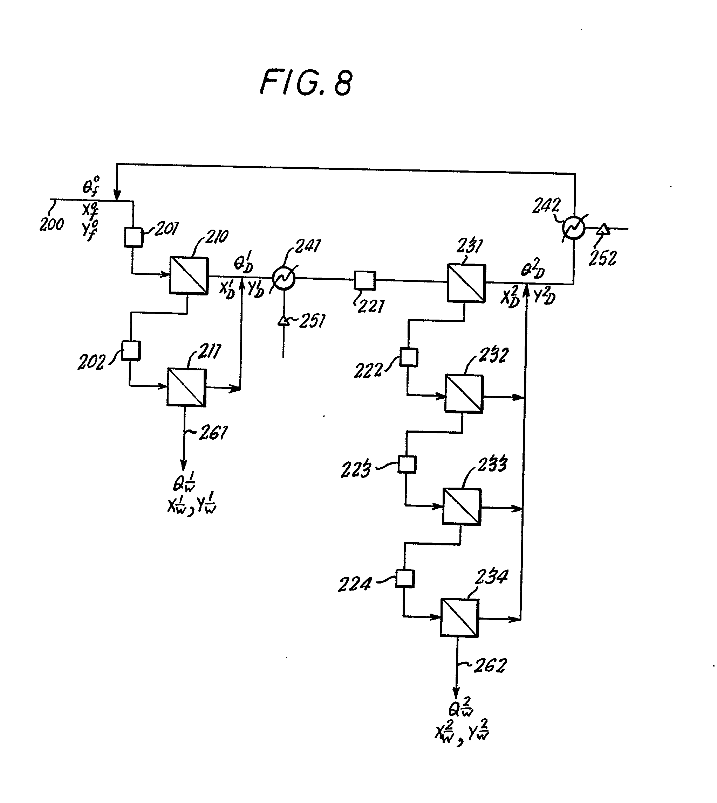

In this example, separation system (as shown in Fig. 8)
in accordance with the invention is illustrated. The system
comprised the first module consisting of 2 module units and
the second module consisting of 4 module units. Each of the
module units was of the type shown in Fig. 6 and contained
a composite membrane prepared by coating a polyvinyl alcohol-
polyvinylpyrrolidone (weight ratio 1 : 2 ) hollow fiber
membrane with a silicone rubber. The polyvinyl alcohol used
was PVA 117, a product of Kuraray Co., Ltd. The polyvinylpyrrolidone was a product of Kishida Chemical Co., Ltd. and
its molecular weight was 360,000. The polyvinyl alcohol-
polyvinylpyrrolidone layer thickness was 30 microns and the silicone rubber layer thickness was 40 microns. The section of the hollow fiber was a true circle. The hollow fiber was nonporous and had the inside diameter of 210 microns and the outside diameter of 350 microns. The effective hollow fiber membrane length within the module was 800 mm. The total membrane area of the first module (calculated for the outside surface area of the polyvinyl alcohol-polyvinylpyrrolidone layer) was 0.08 m$^2$ (2 cyclindrical module units) and the total membrane area of the second module was 0.182 m$^2$ (4 cyclindrical module units). Separation factors values $\alpha^A_{A/B}$ and $\alpha^B_{B/A}$ and fluxes $L^A$ and $L^B$ of this composite membrane under the conditions of [Methyl acetate]$_A$/[Methanol]$_B$ = 50/50, pressure on the reduced pressure side of 35 mmHg and temperature 25°C, are 2.55, 2.64, 3.55 kg/m$^2$·hr, 1.21 kg/m$^2$·hr, respectively.

The cylinder of each module unit was made of stainless steel and had, as shown in Fig. 6, an inlet/outlet 41 and an outlet 42 each communicating with the inside of the composite membrane hollow fiber, and an outlets 43 and an outlet 44 each communicating with the outside of the fiber.

In each unit module belonging to the first module, the mixed liquid (methyl acetate-methanol mixture; weight ratio 2 : 3) or a mixture thereof with the liquid from the preceding unit was fed through inlet 41 and the nonpermeating fraction was taken out through outlet 42. The fraction permeating the composite hollow fiber membrane was taken out through outlets 43 and 44. Outlets 43 and 44 were connected to a piping in which the pressure was maintained at 30 mmHg (40 kPa) On the other hand, in the second module, the mixed liquid (first permeating fraction) was fed in the reverse manner, namely through inlet 43 and taken out through outlet 44,
while the permeating fraction was taken out through outlets
41 and 42 under 30 mmHg $(40 kPa)$. In this manner, the mixed liquid
was allowed to permeate the composite membrane from the
polyvinyl alcohol-polyvinylpyrrolidone layer side in the
first module, while, in the second module, the liquid was
allowed to permeate the membrane from the silicone rubber
layer side. It should be noted that the combined manner
of use of only one kind of membrane (dually active membrane)
such that the mixed liquid is contacted with one surface
of the membrane and the first permeating liquid with the
other surface is the most important feature of the invention
when practiced in this mode.

The feed liquids to the first and the second module,
respectively, were heated to 35°C before entering the
respective module unit. The permeating fractions (vapors)
were condensed using multistage refrigerators.

To the above mentioned separation system using membranes,
there was fed a mixed liquid composed of 41 % methyl acetate
($X_f^0$ = 41 % by weight) and 59 % methanol ($Y_f^0$ = 59 %) at the
flow rate of $Q_f^0$ = 0.10 kg/hr. The total quantity of the
liquid flowing out of the first module was $Q_w^1$ = 0.062 kg/hr,
and the composition of the liquid was: methanol $Y_w^1$ = 89.0 %,
methyl acetate $X_w^1$ = 11.0 % (by weight). The total quantity
of the liquid flowing out of the second module was
$Q_w^2$ = 0.038 kg/hr, and the composition was: methyl acetate
$X_w^2$ = 88.0 % and methanol $Y_w^2$ = 12.0 % (by weight). The total
quantity of the fraction which permeated the first module
membrane was $Q_d^1$ = 0.227 kg/hr, and the composition was methyl
acetate $X_d^1$ = 49.5 % and methanol $Y_d^1$ = 50.5 % (by weight), and the total quantity of the fraction permeating the second module membrane was $Q_d^2 = 0.189$ kg/hr, and the composition was methyl acetate $X_d^2 = 42.0$ % and methanol $Y_d^2 = 58.0$ % (by weight). Thus, in this test run, the 2 : 3 methyl acetate-methanol mixture could be separated into the components to the purity of 88.0 % and 89.0 % respectively.

Referring to Fig. 8, 200 is a feed line for the mixed liquid, 201 through 202 are heaters, 210 through 211 are first module units, 221 through 224 are heaters, 231 through 234 are second module units, 241 and 242 are condensers, 251 and 252 are vacuum pumps, 261 is an outlet passageway for the first nonpermeating liquid fraction, from the first module, and 262 is an outlet passageway for the second nonpermeating fraction from the second module.

### Example 3

In a system as represented by the flowchart in Fig. 4, membrane separators 54 and 57 each contained negative membranes and membrane separators 63, 65 and 67 contained positive membranes. Using this separation system, 20.0 kg/hr of aqueous ethanol with the water content of 20 weight % fed through line 51 and 5.36 kg/hr of an aqueous solution containing 31.5 weight % of ethanol coming through 52 after permeation through the positive membranes were combinedly heated in heater 53 and then introduced into membrane separator 54. The permeating fraction weighed 7.48 kg/hr and was an aqueous solution containing 11.8 weight % of ethanol. The rejected fraction weighed 17.88 kg/hr and was an aqueous ethanol with the water content of 6.0 weight %. Said rejected fraction was then treated in membrane separator 57 and there were obtained 1.76 kg/hr of an aqueous solution containing 47.6 weight % of ethanol as the permeating fraction and 16.61 kg/hr of 99 weight % pure ethanol as the rejected fraction. The permeating fractions from membrane separators 54 and 57 were combined (9.24 kg/hr, ethanol concentration 18.6 weight %) and condensed in condenser 60 and then treated successively in positive membrane separators 63, 65 and 67, whereupon the respective permeating fractions (aqueous solutions) had the ethanol contents of 45.2, 22.4 and 9.2 weight %, respectively, and weighed 2.75, 1.55 and 1.06 kg/hr, respectively. As the rejected fractions from the respective separators, there were obtained 6.50, 4.95 and 3.89 kg/hr of water fractions containing 7.4, 2.7 and 1.0 weight % of ethanol, respectively. The permeating fractions from separators 63, 65 and 67 were condensed in condenser 69 and recycled via line 52. A part of the nonpermeating fraction coming out of each separator was recycled to the heater before said separator. The quantities of steam required for membrane separators 54, 57, 63, 65 and 67 were 8.79, 1.45, 2.42, 1.56 and 1.17 kg/hr, respectively.

The negative membrane used in this pervaporation process was a hollow fiber type polyvinyl alcohol membrane (inside diameter 400 microns, membrane thickness 100 microns, $\alpha^A_{A/B} = 60$, $L^A = 200$ g/m$^2 \cdot$hr). The membrane surface areas in membrane separators 54 and 57 were 38.0 and 9.0 m$^2$, respectively. The positive membrane used was a hollow fiber type silicone rubber membrane (inside diameter 400 microns, membrane thickness 60 microns, $\alpha^B_{B/A} = 7.7$, $L^B = 100$ g/m$^2 \cdot$hr) and the membrane surface areas in separators 63, 65 and 67 were 28.0, 16.0 and 10.6 m$^2$, respectively. The processing conditions were as follows: liquid phase pressure 1,000 mmHg (133 kPa).

vapor phase pressure 20 mmHg (2.7 kPa), and heater temperature 52°C. The total quantity of steam required in this process was 14.22 kg/hr. It is thus evident that this process is advantageous with respect to energy as compared with the conventional fractional distillation processes.

### Example 4

In order to show that the use of the method of the invention is not limited to the continuous separation system using membranes such as mentioned in Example 1-3, a run was conducted in the following manner.

An experimental membrane module as shown in Fig. 5 was used. Thus, a flat nonporous membrane 31 (disk with diameter 60 mm, membrane surface area 28.3 $cm^2$) was mounted on a sintered stainless steel support 36 for the membrane, and a mixed liquid was introduced via membrane module inlet 35 into mixed liquid chamber 32 at the rate of about 25 ml/min. using a small-sized quantitative pump for laboratory use, and then taken out via outlet 34 and recycled via inlet 35 to mixed liquid chamber 32 (Examples 4-1 to 4-3), or the whole module was shaken on a laboratory shaker so as to effect stirring of the liquid within the mixed liquid chamber (Examples 4-4 to 4-7).

On the other hand, vapor outlet 37 of exhaust chamber 33 was connected to a vacuum pump and the pressure within said chamber was maintained at 1 mmHg (133 Pa) (Examples 4-4, 4-5 and 4-7), or 30 mmHg (4.0 kPa) (Examples 4-1, 4-2, 4-3 and 4-6). The vaporized fraction which permeated the membrane was collected by cooling with liquid nitrogen.

In the first stage, mixed liquid chamber 32 in which one membrane (negative or positive membrane) was mounted was used.

The mixed liquid in the mixed liquid chamber was analyzed by gas chromatography for the concentrations of the components. When one component concentration of the mixed liquid in the mixed liquid chamber reached about 90%, the first stage of the experiment was discontinued. In the second stage, mixed liquid chamber 32 in which another membrane was mounted was used, and the permeating fraction obtained in the first step was introduced into mixed liquid chamber 32 in the second step and processed in the same manner as above. However, the liquid circulation (recycling) was discontinued some dozens of hours after commencement of the second stage of experiment because the circulation became difficult due to the insufficient quantity of the liquid; instead, the whole membrane module was shaken on a laboratory shaker so as to effect stirring of the liquid within the mixed liquid chamber.

In this manner, from the original mixture there were separated the first stage residual liquid (one component, above 80 % pure) and the second stage residual liquid (another component, above 80 % pure).

The results are shown in the Table-1.

The separation factors and fluxes of each membrane obtained by carrying out pervaporation under the condition of [A]/[B] = 50/50 are shown in the Table-2.

It is thus apparent that the present invention has made it possible to effect highly efficient multistage separation by two kinds of membrane. However, the invention should by no means be construed as being limited to the modes of practice as given hereinbefore for the purpose of illustration. For instance, such modifications may easily be conceivable as combination of the method of the invention with a distillation process or some other separation process, or a system in which the method of the invention is repeated two or more times. Such and other modifications should be construed as falling within the scope of the present invention.

Table-1

| Example | Stage | Membrane | Feed | | Permeating fraction | | Residual fraction | | Permeation |
|---|---|---|---|---|---|---|---|---|---|
| | | | amount(g) | component(%) | amount(g) | component(%) | amount(g) | component(%) | Time (min.) |
| 4-1 | 1st | PVA/PVP[1] (1/1) (Negative Membrane) | 100.8 | Benzene : 61 Methanol : 39 | 99.24 | Benzene : 38.1 Methanol : 61.9 | 1.56 | Benzene : 95.5 Methanol : 4.5 | 360 |
| | 2nd | IR[2] (Positive Membrane) | 99.24 | Benzene : 38.1 Methanol : 61.9 | 29.84 | Benzene : 84.1 Methanol : 15.9 | 69.40 | Benzene : 18.5 Methanol : 81.5 | 10800 |
| 4-2 | 1st | PVA/PVP (1/1) (Negative Membrane) | 100.4 | Benzene : 50 Methanol : 50 | 96.60 | Benzene : 48.1 Methanol : 51.9 | 3.80 | Benzene : 98.1 Methanol : 1.9 | 660 |
| | 2nd | Latex membrane[3] (Positive Membrane) | 96.60 | Benzene : 48.1 Methanol : 51.9 | 50.38 | Benzene : 81.0 Methanol : 19.0 | 40.22 | Benzene : 2.2 Methanol : 97.8 | 9000 |
| 4-3 | 1st | Polyethylene (Positive Membrane) | 100.20 | Benzene : 50.5 Methanol : 49.5 | 63.10 | Benzene : 76.9 Methanol : 23.1 | 37.10 | Benzene : 5.6 Methanol : 94.4 | 1080 |
| | 2nd | Cellulose Triacetate (Negative Membrane) | 63.10 | Benzene : 76.9 Methanol : 23.1 | 10.94 | Benzene : 23.1 Methanol : 76.9 | 52.16 | Benzene : 88.2 Methanol : 11.8 | 1800 |
| 4-4 | 1st | PVA/PVP (1/1) (Negative Membrane) | 30.40 | Toluene : 80.0 Methanol : 20.0 | 21.54 | Toluene : 73.9 Methanol : 26.1 | 8.86 | Toluene : 94.9 Methanol : 5.1 | 300 |
| | 2nd | Silicone rubber (Positive Membrane) | 21.54 | Toluene : 73.9 Methanol : 26.1 | 17.81 | Toluene : 88.8 Methanol : 11.2 | 3.73 | Toluene : 2.1 Methanol : 97.9 | 420 |
| 4-5 | 1st | Silicone rubber (Positive Membrane) | 15.23 | Ethanol : 20 Water : 80.0 | 4.60 | Ethanol : 51.1 Water : 48.9 | 10.63 | Ethanol : 6.5 Water : 93.5 | 9000 |
| | 2nd | PVA (Negative Membrane) | 4.60 | Ethanol : 51.1 Water : 48.9 | 2.54 | Ethanol : 12.2 Water : 87.8 | 2.06 | Ethanol : 99.1 Water : 0.9 | 3600 |
| 4-6 | 1st | Silicone rubber (Positive Membrane) | 21.20 | AcOMe[4] : 40.0 Methanol : 60.0 | 12.91 | AcOMe : 60.5 Methanol : 39.5 | 8.29 | AcOMe : 8.1 Methanol : 91.9 | 420 |
| | 2nd | PVA/PVP (2/1) (Negative Membrane) | 12.91 | AcOMe : 60.5 Methanol : 39.5 | 6.00 | AcOMe : 24.0 Methanol : 76.0 | 6.91 | AcOMe : 91.7 Methanol : 8.3 | 2400 |
| 4-7 | 1st | PVA (Negative Membrane) | 20.5 | Acetic acid:80 Water : 20 | 3.80 | Acetic acid:13.8 Water : 86.2 | 16.7 | Acetic acid:94.9 Water : 5.1 | 4200 |
| | 2nd | Silicone rubber (Positive Membrane) | 3.80 | Acetic acid:13.8 Water : 86.2 | 2.00 | Acetic acid:20.5 Water : 79.5 | 1.80 | Acetic acid:6.5 Water : 93.5 | 9000 |

1) PVA : Polyvinyl alcohol    PVP : Polyvinylpyrrolidone
2) Isoprene Rubber
3) Natural Rubber Latex + Ethylene/Acrylic Acid Emulsion (weight ratio 1:1)
4) AcOMe : methyl acetate

Table-2

| | Membrane | mixture (1 : 1) | $\alpha$ | L (g/m$^2$·hr) | Thickness (microns) | Reduced Pressure (mmHg) |
|---|---|---|---|---|---|---|
| Positive Membrane | Silicone rubber | Toluene/Methanol | 9.77 | 1318 | 110 | 1 |
| | Silicone rubber | Methylacetate/Methanol | 3.36 | 1485 | 60 | 35 |
| | Silicone rubber | Ethanol/Water | 4.35 | 45 | 110 | 1 |
| | Silicone rubber | Acetic acid/Water | 1.50 | 23.8 | 90 | 1 |
| | Latex membrane[1] | Benzene/Methanol | 10.4 | 391 | 70 | 35 |
| | Polyethylene | Benzene/Methanol | 6.32 | 2562 | 30 | 35 |
| | IR[2] | Benzene/Methanol | 9.47 | 104 | 110 | 35 |
| Negative Membrane | PVA[3]/PVP[4] (1/1) | Methanol/Benzene | 1.66 | 6661 | 45 | 35 |
| | PVA/PVP (1/1) | Methanol/Toluene | 1.60 | 6663 | 45 | 1 |
| | PVA/PVP (2/1) | Methanol/Methylacetate | 7.10 | 120 | 40 | 35 |
| | PVA | Water/Ethanol | 20.6 | 57 | 25 | 1 |
| | PVA | Water/Acetic acid | 27.6 | 85.4 | 25 | 1 |
| | Cellulose triace-tate | Methanol/Benzene | 9.92 | 380 | 50 | 35 |

1) Natural Rubber Latex + Ethylene/Acrylic acid Emulsion (weight ratio 1:1)

2) Isoprene Rubber      3) Polyvinyl alcohol

4) Polyvinylpyrrolidone

CLAIMS

1.      A method of separating components of a mixed liquid, which comprises allowing a mixed liquid containing at least two components A and B which are different in polarity from each other to permeate a membrane $M_A$ having a separation factor $\alpha_{A/B}^A$ of more than 1 and removing component B from the liquid that has permeated membrane $M_A$ by means of a membrane $M_B$ having a separation factor $\alpha_{B/A}^B$ of more than 1, whereby components A and B are separated from each other.

2.      A method as claimed in Claim 1, in which the separation factor $\alpha_{A/B}^A$ of membrane $M_A$ is in the range 1.5 to 100 and the separation factor $\alpha_{B/A}^B$ of membrane $M_B$ is in the range 1.5 to 100.

3.      A method as claimed in Claim 1 or 2, in which the separation factor $\alpha_{A/B}^A$ of membrane $M_A$ is not less than 5 and the separation factor $\alpha_{B/A}^B$ of membrane $M_B$ is not less than 5.

4.      A method as claimed in Claim 1, 2 or 3, in which the flux $L^A$ through membrane $M_A$ is in the range 20 to 20,000 $g/m^2 \cdot hr$ and the flux $L^B$ through membrane $M_B$ is in the range 20 to 20,000 $g/m^2 \cdot hr$.

5.      A method as claimed in any preceding claim in which components A and B are separated from each other by pervaporation using membranes $M_A$ and $M_B$.

6.      A method as claimed in Claim 5, in which the mixed liquid containing at least two components A and B is allowed to permeate membrane $M_A$ after or with heating.

7.      A method as claimed in Claim 5 or 6, in which the vaporized component that has permeated membrane $M_A$ is condensed and then allowed to permeate membrane $M_B$ after or with heating.

8.      A method as claimed in any preceding claim, in which
the component that has permeated membrane $M_B$ is recycled in such
a manner that the said component is blended with the said
mixed liquid containing at least A and B and the resulting blend
is allowed to permeate membrane $M_A$.

9.      A method as claimed in any preceding claim, in which
one of the membranes $M_A$ and $M_B$ has an active layer composed of a
hydrophobic material that is either (i) a membrane of a hydrophobic
material or (ii) a composite membrane composed of an active layer
of hydrophobic material and a layer of hydrophilic material
with which the mixed liquid to be treated is to come into contact,
so as to allow permeation of the less polar component, and the
other of membranes $M_A$ and $M_B$ has an active layer composed of a
hydrophilic material that is either (i) a membrane of a hydrophilic
material or (ii) a composite membrane composed of an active layer
of  hydrophilic  material  and  a   layer of hydrophobic material
with which the mixed liquid to be treated is to come into contact,
so as to allow permeation of a more polar component.

10.      A method as claimed in Claim 9, in which, in the said
one of membranes $M_A$ and $M_B$, the hydrophobic material is silicone
rubber and the layer of hydrophilic material, if any, is composed
of a mixture of polyvinyl alcohol and an amide-group-containing
hydrophilic polymer.

11.      A method as claimed in Claim 9 or 10 in which, in the
said other of the membranes $M_A$ and $M_B$, the hydrophilic material
is a cellulosic polymer, polyvinyl alcohol or a mixture of polyvinyl alcohol and an amide-group-containing polymer, and the
hydrophobic material layer, if any, is composed of silicone
rubber.

12.      A method as claimed in Claim 10 or 11, in which the
amide-group-containing polymer is polyvinylpyrrolidone, polyvinylpiperidone, polyvinylpyridone, polyvinyl-N-methylacetamide or poly-N,N-dialkylacrylamide.

13.    A method as claimed in Claim 9, 10 or 11, in which each
of membrane $M_A$ and membrane $M_B$ is a composite membrane composed of
a hydrophobic material layer and a hydrophilic material layer, the
mixed liquid coming into contact with the hydrophobic material
layer of membrane $M_A$ and the mixed liquid that has permeated
membrane $M_A$ coming into contact with the hydrophilic material
layer of membrane $M_B$, or the mixed liquid coming into contact with
the hydrophilic material layer of membrane $M_A$ and the mixed liquid
that has permeated membrane $M_A$ coming into contact with the hydrophobic material layer of membrane $M_B$.

14.    A device for separating components of a mixed liquid that
comprises
(i)    a first module (2) containing a membrane $M_A$ (3) having a
separation factor $\alpha_{A/B}^{A}$ of more than 1, the said module (2) having
an inlet (1) for a mixed liquid containing at least two components
A and B different in polarity from each other, an outlet (4) for the
fraction that has not permeated membrane $M_A$ (3) (first nonpermeating
fraction) and an outlet (5) for the fraction that has permeated
membrane $M_A$ (3) (first permeating fraction),
(ii)    a second module (8) containing a membrane $M_B$ (9) having a
separation factor $\alpha_{B/A}^{B}$ of more than 1, the said module (8) having
an inlet (7) for the first permeating fraction, an outlet (10) for
the fraction that has not permeated membrane $M_B$ (second nonpermeating
fraction) and an outlet (11) for the fraction that has permeated
membrane $M_B$ (9) (second permeating fraction), and
(iii)    a passageway (6) connecting the first permeating fraction
outlet (5) of the first module (2) with the first permeating fraction
inlet (7) of the second module (8).

15.    A device as claimed in Claim 14, in which a passageway
(12) is provided for recycling the second permeating fraction to
the initial stream of mixed liquid before its introduction into the
first module (2).

16.     A device as claimed in Claim 14 or 15, in which the passageway (8) connecting the first permeating fraction outlet (5) of the first module (2) with the first permeating fraction inlet (7) of the second module (8) has a means (15) for condensing the first vaporized permeating fraction.

17.     A device according to Claim 16 including a means (19) for heating the mixed liquid before its introduction into the first module (2) and a means (17) for heating the condensate from the first permeating fraction before its introduction into the second module (18).

18.     A device according to Claim 16 or 17 including a means (15) for condensing the second vaporized permeating fraction, and the passageway (12) recycles the condensate from the means (15) to the initial stream of mixed liquid before its introduction into the first module (2).

19.     A device as claimed in any one of Claims 14 to 18, in which there are two or more modules containing a membrane $M_A$ connected to each other so as to introduce nonpermeating fraction from each module into the next module to obtain nonpermeating fractions enriched with B component from the preceding module, and there are two or more modules containing a membrane $M_B$ connected to each other so as to introduce nonpermeating fraction from each module into the next module to obtain nonpermeating fractions enriched with A component from the preceding module.

20.     A device according to Claim 14, in which the module (2) is for hydraulic permeati    and the second module (8) is for pervaporation.

*FIG.1*

*FIG.2*

*FIG.3*

*FIG.4*

*FIG.5*

*FIG.6*

# FIG.7

# FIG. 8